# EUROPEAN PATENT SPECIFICATION

(11) **EP 1 635 592 B1**
(45) Date of publication and mention of the grant of the patent: **23.05.2007**
(21) Application number: 04360084.0
(22) Date of filing: 13.09.2004
(51) Int. Cl.: H04Q 7/38

(54) **Estimation of channel quality for wireless communication network**
Abschätzung der Übertragungsqualität in einem Funknetz
Esimation de la qualité de transmission dans un réseau de communication sans fil

(43) Date of publication of application: 15.03.2006
(73) Proprietor: Alcatel Lucent, 75008 Paris (FR)
(72) Inventor: Braun, Volker, Dr.-Ing., 70178 Stuttgart (DE); Zeller, Dietrich, 71067 Sindelfingen (DE); Dunlop, LiPo, 70197 Stuttgart (DE)

(56) References cited:
- EP-A- 1 351 424
- WO-A-20/04042982
- US-A- 6 167 031
- "3rd Generation Partnership Project; Technical Specification Group Radio Access Network; Physical layer procedures (FDD) (Release 6); 3GPP TS 25.214 v6.2.0"[Online] June 2004 (2004-06), XP002317726 Retrieved from the Internet: URL:www.3gpp.org> [retrieved on 2005-02-15]

## Description

### Field of the invention

The present invention relates to the field of determination of channel quality in the framework of radio based wireless communication.

### Background and prior art

In wireless communication networks, such as UMTS based networks, adaptive modulation and adaptive coding schemes as well as extensive multicode operation, fast and spectrally efficient re-transmission strategies can be applied in order to achieve higher spectral efficiency for packet data transfer between a base station and user equipment (UE) of a communication network. In particular, the High-Speed Downlink Packet Access (HSDPA) serves as an extension to the UMTS standard making use of adaptive modulation and coding schemes in order to optimize data throughput.

Selection of appropriate modulation and coding schemes by a packet scheduler of the base station, i.e. the Node B, is typically performed by making use of feedback information that is transmitted from mobile terminals or user equipment to the base station. Based on this feedback information, the packet scheduler of the Node B can precisely determine to which terminal a data packet has to be transmitted at which data rate. Moreover, the packet scheduler may modify the transmission power depending on the feedback information.

Feedback information is typically provided by means of a channel quality indicator (CQI) that serves to indicate which estimated transport block size, modulation type and number of parallel codes could for a certain transmission power be correctly received by a mobile station in the downlink direction. Such a downlink channel quality indicator (CQI) might be transmitted to the base station by means of an Uplink High-Speed Dedicated Physical Control Channel (HS-DPCCH), which in turn may further support ACK/NACK-transmission reflecting the results of a Cyclic Redundancy Check (CRC) after the packet decoding and combining.

Making use of CQIs in the Uplink direction effectively allows to implement a power control mechanism for a high-speed Downlink channel, e.g. for the High Speed Downlink Shared Channel (HS-DSCH) used for high speed data transmission in HSDPA. In this way only a required transmission power is used for transmission of data packets in a Downlink channel. The CQI is indicative of the channel quality that governs e.g. required transmission power as well as selection of an appropriate modulation and coding scheme.

It is therefore important, that the information provided by the CQIs is accurate and represents a momentary state of the Downlink channel. However, the accuracy of the CQI reports can be degraded in several ways. The CQI values are determined by means of the user equipment on the basis of a short term measurement of a noisy received signal. Hence, this determination is inherently subject to an inevitable measurement inaccuracy. Since the CQI reports have to be evaluated by means of the base station, i.e. they first have to be transmitted to the base station, a compulsory delay between CQI determination and CQI evaluation implicitly exists. Additionally, the CQI reports may not be instantaneously transmitted to the base station. For example, CQI transmission is typically based on a fixed time pattern either in a periodic or non-periodic way. For example, in UMTS Terrestrial Radio Access-Frequency Division Duplex (UTRA-FDD) a CQI is sent periodically, with a feedback cycle between 2 ms and 160 ms.

Moreover, a mobile station can be subject to a movement with a high velocity, e.g. a velocity above 50 km /h. In such cases a CQI report that is received at the base station from a mobile station cannot be used as a measure of instantaneous channel quality because the channel quality strongly depends and may drastically vary with the position of the mobile station.

Prior art document WO 2004/042982 describes a method for quality prediction for wireless communication systems, wherein a wireless user equipment derives a predictive CQI from past and current measurements on downlink transmissions by linear prediction and send it to a base station for use in updating transmission parameters. Such an approach particularly suffers from insufficient performance at large velocities of the user equipment.

Within the Third Generation Partnership Project (3 GPP) there exist approaches to improve accuracy of transmission channel quality information in the base station. A first approach, denoted as CQI interpolation makes use of infrequently obtained CQI reports that can be interpolated or extrapolated by using knowledge of the transmission power of the associated dedicated channel. This CQI interpolation scheme is in particular beneficial to compensate reporting delay in scenarios where e.g. the velocity of a mobile station is sufficiently small. However, when a mobile station moves with a large velocity, the CQI interpolation scheme provides an insufficient performance and its application is rather disadvantageous.

The second approach is based on the so called CQI averaging. The CQI averaging scheme in principle determines a value that indicates an average channel quality determined by a mobile station. This is particularly applicable for large velocities of mobile stations but leads to rather resource wasting scheduling for the Downlink packet scheduling for low and moderate velocities of a mobile station.

Prior art document 3GPP TS 25.214 V6.2.0 ("3^{rd} Generation Partnership Project; Technical Specification Group Radio Access Network"; June 2004) discloses a UE reporting a CQI value derived from measurements of received power based on an unrestricted observation interval, wherein no particular precaution is taken with respect to universal applicability irrespectively of a velocity of the user equipment.

The present invention therefore aims to provide a method of estimating the transmission quality of a Downlink data transmission channel that is universally applicable irrespectively of a velocity of user equipment. In this way the invention serves to improve adaptive modulation and adaptive coding as well as adaptive power control mechanisms of a base station of a wireless radio based communication network.

### Summary of the invention

The present invention provides a method of estimating a channel quality of a wireless data transmission channel by making use of channel quality indicators (CQIs) that are transmitted from a mobile station to a base station of a wireless communication network. The method comprises receiving of at least a first channel quality indicator from the mobile station that is indicative of the channel quality at a first time. Based on at least the received first channel quality indicators an estimation procedure is selected that is adapted to estimate the channel quality at a second time. After selection of an appropriate estimation procedure, the selected estimation procedure is applied for estimating the channel quality at the second time. Having estimated the channel quality at the second time, the estimated channel quality is typically provided to the packet scheduler of the base station.

By making use of at least a first received channel quality indicator an appropriate estimation procedure can be selected and applied for estimating a momentary channel quality in a way that is preferably applicable for transmission conditions that were indicated by the first channel quality indicator. For example, a set of channel quality indicators received by the base station might be indirectly indicative of a velocity of the mobile station. Hence, at least an estimate of the mobile station's velocity can in principle be derived by analysis of the set of received channel quality indicators. Based on the information extracted from the at least first received channel indicator, one or several of at least two estimation procedures can be selected for a precise estimation of the channel quality at the second time. Additionally, other parameters, like transmission power or power control commands of e.g. the associated Downlink Dedicated channel, or transmission error rate of the data transmission channel may also be obtained and evaluated for selection of an estimation procedure that is appropriate for the momentary transmission conditions.

Consequently, the invention provides an adaptive estimation scheme for estimating a channel quality with respect to a variety of parameters that have an impact on the accuracy and delay of channel quality indicators, such as velocity of a mobile station, transmission frequency of the CQls, measurement inaccuracy of a mobile station and mobile station inherent delay.

According to a preferred embodiment of the invention, the estimation procedure comprises a channel quality interpolation procedure that makes at least use of the at least first channel quality indicator. Additionally, the channel quality interpolation procedure may also exploit information of the transmission power of e.g. the associated Downlink Dedicated channel. Moreover, the channel quality interpolation procedure may further exploit a plurality of successively received channel quality indicators. In this way the channel quality interpolation procedure may be adapted to perform an extrapolation of the channel quality, i.e. to determine a momentary or even future channel quality on the basis of non-momentary channel quality indicators, i.e. channel quality indicators referring to the channel quality that lies in the past.

According to a further preferred embodiment of the invention, the estimation procedure further comprises a channel quality averaging procedure that makes at least use of the at least first channel quality indicator. Preferably, channel quality averaging exploits a plurality of successively obtained channel quality indicators in order to determine an average value indicating the average channel quality determined by a particular mobile station. Moreover, the channel quality averaging procedure may further exploit additional input information, like an averaging period that has to be applied.

Preferably, the averaging procedure makes use of suitable filter functions with appropriate forgetting factors. The averaging procedure is typically applicable to scenarios where the mobile station moves with a high velocity. Estimating of a momentary channel quality by making use of the averaging procedure requires determination of an average CQI value based on a plurality of previously obtained CQI reports. Consequently, this average value can only be representative of a channel quality during an elapsed time interval. Hence, the average value resulting from the averaging procedure only approximates a momentary channel quality with a limited accuracy.

According to a further preferred embodiment of the invention, the second time indicates a momentary point of time or a future point of time. In particular, when the estimation procedure comprises the channel quality interpolation procedure, the estimated channel quality represents an momentary channel quality or even a channel quality that is estimated for a point of time that is in the future. Alter natively and in particular when the averaging procedure is applied, the second time may also refer to a point of time that does not exactly match the momentary point of time. In this case, the second time may refer to a point of time that is slightly earlier than the momentary point of time.

Additional to the actually obtained channel quality indicators also other parameters specifying the general quality or reliability of a data transmission channel, like transmission error rate that is e.g. provided by a ratio of ACK/NACK acknowledgement-messages can be exploited for selection of a suitable CQI estimation procedure The transmission error rate or packet error rate can be determined on the basis of ACK/NACK information reflecting the results of a Cyclic Redundancy Check of the packet decoding and combining.

Preferably, the received transmission error rate or packet error rate can be further exploited for determination of the downlink channel quality and for determination of the quality of the channel quality indicator itself. For example, by comparing the at least first CQI with a corresponding packet error rate, the reliability and accuracy of the at least first CQI can in principle be determined by the base station. Information of the quality, i.e. accuracy and reliability, of a received CQI may further be exploited for a selection of the estimation procedure.

According to a further preferred embodiment of the invention, the method of estimating the transmission quality further comprises a calibration procedure that allows to control and to calibrate the packet scheduling of the base station. First of all, a transmission quality measure of the data transmission channel is determined and analyzed. This determined quality measure is indicative of the quality of the data transmission channel and may be specified by means of a data transmission error rate which in turn can be derived from ACK/NACK confirmations resubmitted to the base station from the mobile station. In the following this quality measure is denoted as transmission quality measure. It specifies the transmission quality and does therefore only indirectly relate to the channel quality.

However, the channel quality measure can be related to a transmission quality measure, e.g. 3GPP defines the CQI as a value between 0 and 30, indicating a transport format for packet transmission expressed in terms of number of bits of the data packet, number of parallel codes and modulation type such that for a given transmission power, a data packet formatted to the CQI reported for the transmission channel achieves an average packet error rate of 10%.

In the calibration procedure, the determined, i.e. actually measured, transmission quality measure is then compared with a predefined transmission quality measure. In case that there exists a mismatch between the predefined or target quality measure and the actually measured or determined one, the calibration procedure generated an offset signal that is provided to the packet scheduler of the base station. This offset signal in turn then serves to control the packet scheduler in such a way that the mismatch between estimated and predefined quality measure of the data transmission channel is eliminated or at least minimized.

The offset signal either be used in order to control the packet scheduler directly by means of the offset signal. Alternatively, the offset signal might be used in order to modify the estimated CQI value that is provided to the packet scheduler anyhow. In the latter case the calibration procedure serves to increment or decrement an obtained CQI value and submits this modified CQI value to the packer scheduler.

This calibration procedure effectively realizes an iterative control loop. It allows to compare a transmission quality measure that has been actually measured with a predefined one. In this way a mismatch between actually measured and a target transmission quality measure can be iteratively minimized.

Preferably, the offset signal is applied to the estimated channel quality indicator. Hence, whenever a mismatch is detected by means of the calibration procedure, an estimated CQI can be incremented or decremented prior to submission to the packet scheduler.

Additionally, by determining and analyzing the channel quality measure, the quality of the estimation procedure itself, e.g. for estimating the CQI can be controlled, thus giving a feedback whether the selected estimation procedure has been a good choice and/or if a selected estimation procedure provides sufficient results. Moreover, the calibration procedure effectively allows to eliminate a systematic offset of e.g. the packet scheduler or to compensate some offset effect that might be due to e.g. base station inherent delay, or varying propagation conditions e.g. due to multipath propagation and movement of the user equipment. The calibration procedure therefore serves as a control mechanism of the packet scheduler and / or the transmission module of the base station.

The calibration procedure is preferably implemented by means of a calibration module that is adapted to process a transmission or a packet error rate and to compare actually measured values with target- or predefined values.

Even though the calibration procedure is incorporated into the estimation procedure it may be performed independently of the estimation procedure. In this way irrespectively of estimated or determined CQI information, a calibration of the packet scheduler can be performed on the basis of e.g. measured packet error rate or similar feedback information provided by the user equipment by means of the Uplink channel.

According to a further preferred embodiment of the invention, selecting of the estimation procedure further comprises comparing of the estimated channel quality with a second channel quality that is obtained by means of a second channel quality indicator indicating the channel quality at the second time. Comparison of the estimated channel quality with the second channel quality that has been measured, preferably allows to determine the quality, accuracy and reliability of the first channel quality indicator itself. For instance, when the estimated channel quality has been determined by means of the interpolation procedure, the estimated channel quality can be compared with the corresponding channel quality that has been measured later on in order to determine the quality of the interpolation procedure.

Whenever this comparison provides a substantial mismatch between a measured channel quality and an interpolated or extrapolated channel quality, the averaging procedure is preferably selected for estimating the channel quality. In the other case, when comparison between interpolated or extrapolated channel quality and measured channel quality is within a tolerance margin, the interpolation procedure is preferably selected and applied in order to estimate the channel quality.

According to a further preferred embodiment of the invention, selection of an estimation procedure further comprises performing of a weighting procedure. This weighting procedure is adapted to determine a weighted average channel quality on the basis of at least two channel qualities that are determined by different estimation procedures. The two channel qualities may for example be generated by means of the averaging procedure and the interpolation or extrapolation procedure, respectively. Now, instead of selecting either the averaging procedure or the interpolation procedure, a weighted average channel quality can be generated representing a fraction of the interpolation procedure and the averaging procedure. This is for example applicable, when the first channel quality indicator is indicative of a situation where neither the averaging procedure nor the interpolation or extrapolation procedure provide optimal estimation of the channel quality indicator.

In another aspect the invention provides a base station of a wireless communication network. The base station is adapted to estimate a channel quality of a wireless data transmission channel by making use of channel quality indicators that are transmitted from a mobile station to the base station. The base station comprises means for receiving at least a first channel quality indicator from the mobile station. This at least first channel quality indicator is indicative of the channel quality at a first time. The base station further comprises selection means for selecting an estimation procedure on the basis of the at least first channel quality wherein the estimation procedure is adapted to estimate the channel quality at a second time. The base station further has a processing unit that is adapted to execute the selected estimation procedure for estimating the channel quality at the second time. Finally, the base station has a packet scheduler that is adapted to control a transmission of the data packets to the mobile station in response to receive the estimated channel quality.

In still another aspect, the invention provides a computer program product for determining a channel quality of a wireless data transmission channel by making use of channel quality indicators that are transmitted from a mobile station to a base station of a wireless communication network. The computer program product is operable to receive at least a first channel quality indicator from the mobile station that is indicative of the channel quality at a first time. The computer program is further operable to select an estimation procedure on the basis of the at least first channel quality indicator. This estimation procedure is adapted to estimate the channel quality at a second time. Finally the computer program product is operable to apply the selected estimation procedure for estimating the channel quality at the second time and to provide the estimated channel quality to a packet scheduler of the base station.

### Brief description of the drawings

In the following preferred embodiments of the invention will be described in greater detail by making reference to the drawings in which:
- Figure 1: schematically shows a block diagram of the wireless communication network with an inventive base station,
- Figure 2: schematically shows a detailed block diagram of the base station,
- Figure 3: shows a flowchart for selecting an averaging or an interpolation procedure,
- Figure 4: shows a flowchart for performing a weighting procedure on the basis of a CQI interpolation and CQI averaging procedure.
- Figure 5: shows a flowchart of performing a quality determination of a channel quality indicator,
- Figure 6: shows a flowchart of performing a packet scheduler calibration.

### Detailed description

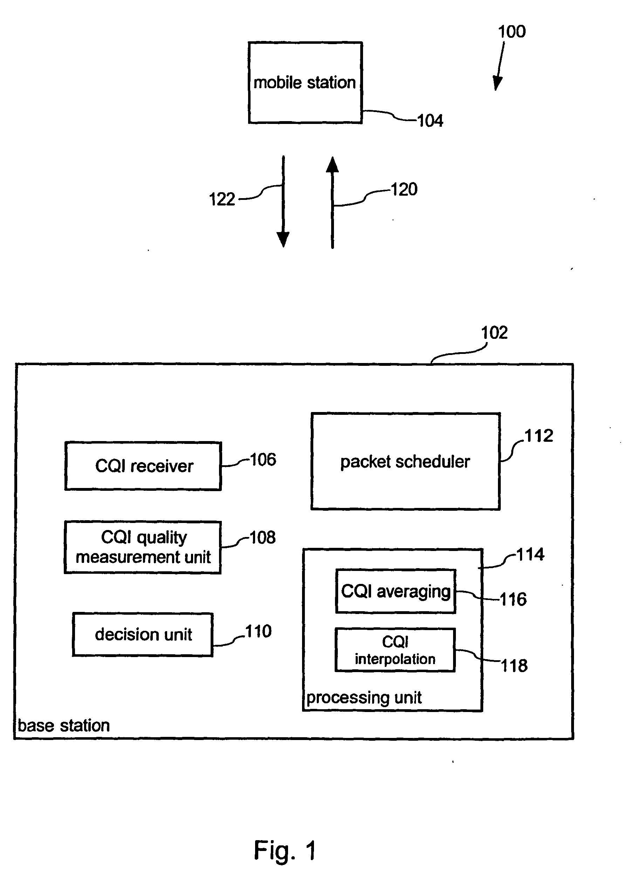

Figure 1 shows a schematic block diagram of a communication network 100. The communication network 100 has a base station 102, and at least one mobile station 104. The base station 102 has a channel quality indicator (CQI) receiver 106, a CQI quality measurement unit 108, a decision unit 110, a packet scheduler 112 as well as a processing unit 114. In particular, the processing unit 114 has a CQI averaging module 116 as well as a CQI interpolation or extrapolation module 118. Transmission of data packets between the base station 102 and the mobile station 104 is provided by means of the downlink channel 120 and the uplink channel 122.

The packet scheduler 112 provides adaptive modulation and adaptive coding of data packets that have to be transmitted via the downlink 120 to the mobile station 104. Packet scheduling may refer to the general composition of a data packet, to the number of data bits within a data packet, the number of parallel codes, the transmission power of a data packet as well as to the modulation properties with respect to e.g. Quadrature Phase-Shift Keying or 16 Quadrature Amplitude Modulation (16 QAM).

In response to receive data packets from the base station 102, the mobile station 104 re-transmits a quality feedback to provide the base station 102 with information that allows to maintain transmission specifications, to adapt transmission power as well as modulation and coding schemes of the base station 102 to momentary required values. For example, the uplink channel 122 may be implemented as uplink high-speed dedicated physical control channel (HS-DPCCH) providing ACK/NACK transmission and downlink channel quality indicators (CQI) to indicate which estimated transport block size, modulation type and number of parallel codes could be correctly received in the downlink direction.

The CQI receiver 106 of the base station 102 is adapted to extract the channel quality indicator from a plurality of signals or data streams entering the base station 102 via the uplink 122. The CQI receiver then passes the received CQIs to the CQI quality measurement unit 108. The CQI quality measurement unit 108 serves to determine an accuracy and / or reliability of the received channel quality indicator. For example, the CQI quality measurement unit 108 might be enabled to determine or to estimate a velocity of the mobile station 104. The CQI quality measurement unit may determine the quality of the CQI directly on the basis of the CQI itself, but may also exploit other parameters that are obtained via the uplink 122 from the base station 104, such as a packet error rate or some other uplink signals that are e.g. indicative of a Doppler frequency allowing to determine the velocity of the mobile station 104.

Based on the result of the quality measurement performed by the CQI quality measurement unit 108, the decision unit 110 may specify which one of a plurality of CQI estimation procedures has to be applied in order to determine an accurate and momentary CQI value. For example, the decision to be made by the decision unit 110 can be performed with respect to a determined velocity of the mobile station 104. In particular, for rather low velocities, e.g. below 50 km/h, the decision unit 110 may specify to make use of an interpolation procedure, whereas for higher velocities an averaging procedure for CQI estimation has to be applied. Here, the concurrent averaging and interpolation procedures are only two examples of a variety of applicable procedures that allow to estimate an accurate and / or momentary CQI value.

The decision provided by the decision unit 110 is handed over to the processing unit 114 selecting an estimation procedure, that has been specified by means of the decision unit 110. For example, when the decision unit 110 specifies to make use of a CQI interpolation, due to e.g. a low velocity of the mobile station 104, the processing unit 114 selects the CQI interpolation module 118 and performs the corresponding interpolation procedure. As a result of this interpolation procedure an estimated channel quality is determined and provided to the packet scheduler 112. In this way, the packet scheduler 112 receives a channel quality indicator that reflects the momentary state of the downlink channel 120 to a high degree. Consequently, modulation and encoding of data packets as well as tuning of corresponding transmission power can be precisely adapted to the momentary channel quality.

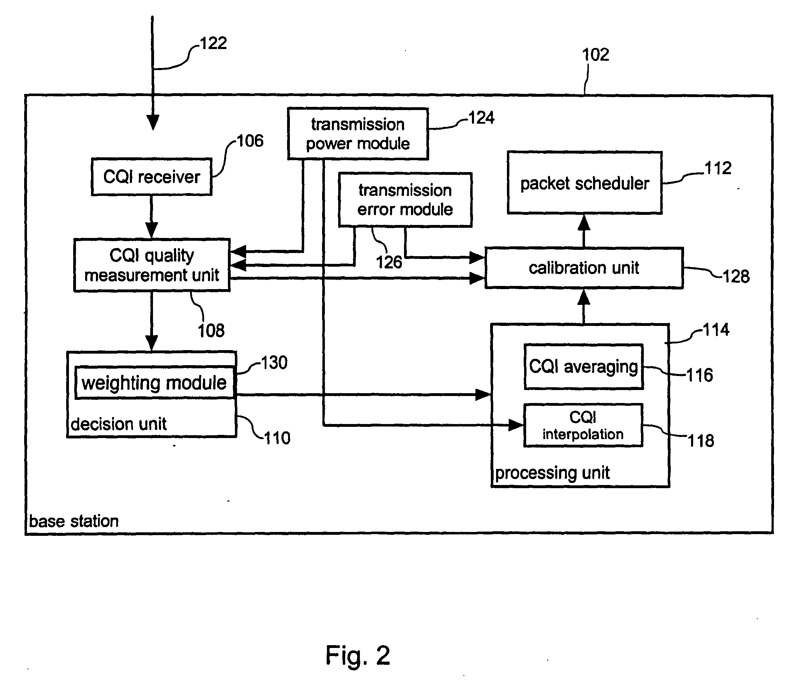

Figure 2 provides a more detailed block diagram of the base station 102. Compared to the illustration of figure 1, the base station 102 illustrated in figure 2 further has a transmission power module 124, a transmission error module 126 and a calibration unit 128. Additionally, the decision unit 110 features a weighting module 130.

The transmission power module 124 serves to provide information of the transmission power to the CQI quality measurement unit 108 to the calibration unit 128 as well as to the CQI interpolation unit 118. Information of the transmission power of the dedicated downlink channel can be effectively exploited in order to determine the quality of an obtained CQI value as well as to interpolate a momentary CQI value. Additionally or alternatively, also power control commands of a closed loop power control can be exploited that are transmitted from the mobile stations 104 to the base station 102.

The transmission error module 126 generates a packet error rate on the basis of ACK/NACK transmission obtained via the Uplink 122 from the mobile station 104. For example, the packet error rate might be obtained by the ratio of dividing the number of NACKs by the sum of ACKs and NACKs that are received from the mobile station 104. This packet error rate therefore provides a measure of the transmission quality.

The transmission error module 126 preferably provides the generated packet error rate to the CQI quality measurement unit 108 and to the calibration unit 128. In this way the CQI quality measurement unit 108 may receive channel quality information from both the CQI receiver 106 as well as from the transmission error module 126. By comparison of these concurrently obtained channel quality values, the quality, reliability or accuracy of a CQI obtained from the CQI receiver 106 can be determined.

The weighting module 130 of the decision unit 110 allows to generate a weighted average channel quality in case that the CQI quality provided by the CQI quality measurement unit 108 indicates that neither the CQI averaging nor the CQI interpolating represents an optimal choice for determining or estimating a momentary CQI value. The weighting module 130 may for example specify that the weighted average channel quality is composed by 30 percent of a result of the CQI averaging and by 70 percent of a result from the CQI interpolation procedure.

The calibration unit 128 is adapted to compare a transmission quality measure of the data transmission channel with a predefined or target quality measure value. The calibration unit 128 may perform this comparison on the basis of a an actually measured quality measure that can be e.g. a data or packet transmission error rate. The determined quality measure is compared with a predefined value and whenever a mismatch is detected an offset signal is generated that serves to at least minimize or to eliminate the mismatch between determined and predefined value. Preferably, the offset signal is accumulated to or subtracted from the estimated CQI value. The modified CQI value is then provided to the packet scheduler in order to tune the quality measure of the data transmission channel to a required or predefined value. Alternatively, offset signal and the determined or estimated CQI value can be provided to the packet scheduler separately.

The data or packet error rate is typically provided by the transmission error module 126. Additionally, the calibration unit may also process information that is extracted from the CQI quality measurement unit 108.

Additionally, the CQI quality measurement may effectively make use of the CQI interpolation procedure. For example, an interpolated CQI value can be stored and later on be compared with an actually measured second CQI value that corresponds to the same point of time than the interpolated CQI value. This comparison effectively allows to determine the quality and the reliability of the interpolation procedure. If the quality of the interpolation procedure is within a tolerance margin, the interpolation procedure might be applied for estimating a momentary CQI value. Otherwise, when it turns out that the interpolation procedure provides insufficient results, the averaging procedure might be applied for successive received CQls.

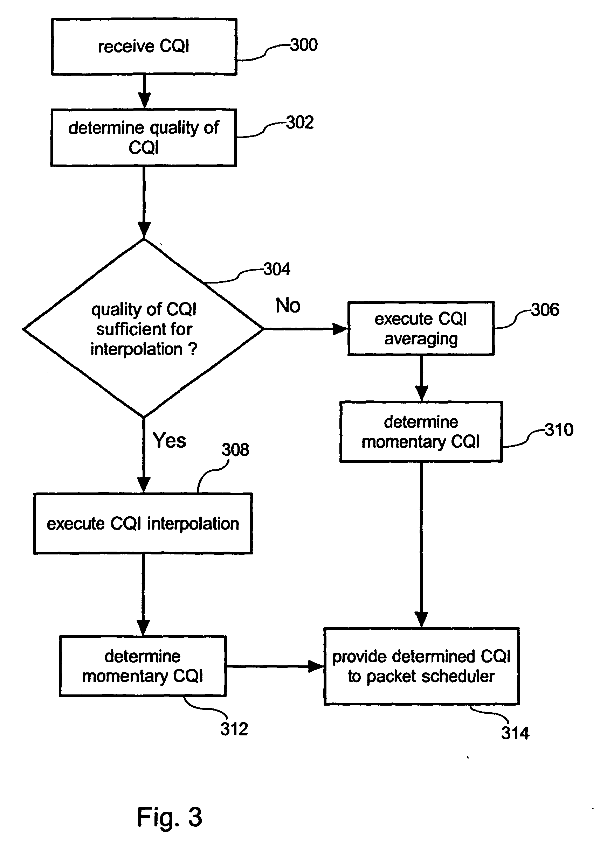

Figure 3 illustrates a flowchart for selecting either a CQI interpolation procedure or a CQI averaging procedure on the basis of a received CQI. In a first step 300 the CQI receiver 106 receives or extracts a channel quality indicator from an uplink data packet. In the preceding step 302 the quality of the received channel quality indicator itself is determined. Determination of the quality of a CQI refers to determination or estimation of its accuracy, delay and reliability.

In the following step 304 it is checked whether the quality of the CQI is sufficient for the interpolation procedure. Hence, it is checked whether the interpolation procedure that generally provides better estimation results than the averaging procedure can be sufficiently applied. For example, there exists a predefined threshold of the CQI quality. If a quality of the CQI is sufficient for the interpolation, i.e. the determined CQI quality is above a predefined threshold, the method continues with step 308, where the CQI interpolation procedure is selected and successively executed. In the other case, when the quality of the CQI is insufficient, i.e. it is beneath a predefined quality threshold, the method continues with step 306, where the CQI averaging procedure is correspondingly selected and successively executed. Depending on the choice of the CQI estimation procedure, a momentary or almost momentary CQI value is determined in the steps 310 and 312, respectively. In step 312 the CQI is determined on the basis of the interpolation procedure and in step 310 the CQI is determined on the basis of the averaging procedure. In either case, after determination of the momentary CQI, the determined CQI is provided to the packet scheduler, which in turn can appropriately adapt the packet scheduling, i.e. it may adapt modulation and coding schemes for the data packets that are to be transmitted to the mobile station 104.

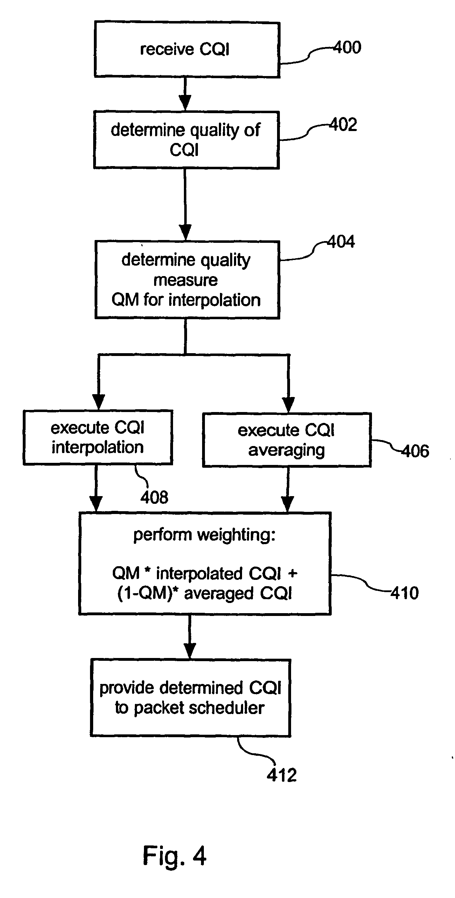

Figure 4 illustrates a flowchart where CQI interpolation and CQI averaging are performed concurrently and where the resulting CQI values become subject of a weighting procedure. Hence, the steps 400 and 402 correspond to steps 300 and 302 of figure 3. Here, a channel quality indicator is received from a mobile station 104 and the general quality of the CQI is determined. Now, instead of making a hard decision whether to apply CQI averaging or CQI interpolating, a quality measure QM is determined for the interpolation procedure in step 404. The quality measure QM represents a measure in how far the interpolation procedure is applicable for a determined quality of a CQI. For instance, the quality measure QM may be within a range from 0 to 1.

After determination of the quality measure QM in step 404, the two steps of executing a CQI interpolation procedure in step 408 and executing a CQI averaging procedure in step 406 are executed concurrently and eventually even simultaneously. Due to the varying estimation procedures applied in steps 408 and 406, the resulting CQI values may substantially differ. However, both concurrently obtained CQI values are provided to step 410, where a weighting procedure is performed. For example, the weighting procedure may make use of the quality measure QM in a way that a weighted average CQI can be calculated by multiplying QM with the result of the interpolated CQI plus a multiplication of the averaged CQI with a factor of (1-QM).

After performing a weighting procedure, i.e. after determining a weighted average estimated CQI value, the weighted average CQI value can be provided to the packet scheduler in step 412. In this way it is effectively prevented to make a hard decision between applying either the CQI interpolation procedure or the CQI averaging procedure.

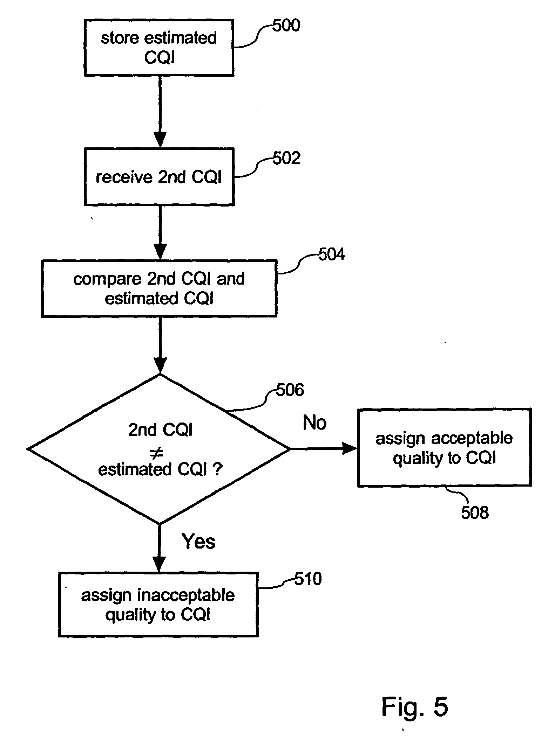

Figure 5 is indicative of a flowchart of performing a quality determination of a received CQI. This quality determination is based on a comparison of an estimated CQI value that has been estimated on the basis of the estimation procedure. This estimated CQI is stored in a first step 500 by means of a storage module that is not explicitly shown in the block diagram of figure 2. This estimated CQI refers to a CQI value corresponding to a second point of time, i.e. a future point of time. Thereafter, in step 502, a second CQI value is received from the mobile station. This second CQI value represents an actually measured CQI value being indicative of the channel quality at the second time. In this way, the estimated CQI that is stored in step 500 as well as the second CQI received in step 502 correspond to the same point of time. In the following step 504 the second CQI and the estimated CQI are compared. This comparison now effectively allows to control the reliability of the estimation procedure.

In the following step 506 the result of the comparison performed in step 504 is evaluated. Whenever there exists an unacceptable mismatch between the second CQI and the estimated CQI, i.e. second CQI and estimated CQI clearly deviate, the method continues with step 510, that assigns an unacceptable quality to the stored CQI value. In response of this unacceptable quality assignment, the decision unit 110 will select the averaging procedure in order to perform the estimation for successive CQI values.

In the opposite case, when in step 506 the second CQI value equals the estimated CQI value or only slightly deviates from the estimated CQI value, the CQI value will be assigned with an acceptable quality whereupon the decision unit 110 will select the interpolation procedure for estimating the CQI value in this way, CQI quality determination is effectively performed by comparison of an interpolation, hence extrapolation based estimated value with an actually measured value.

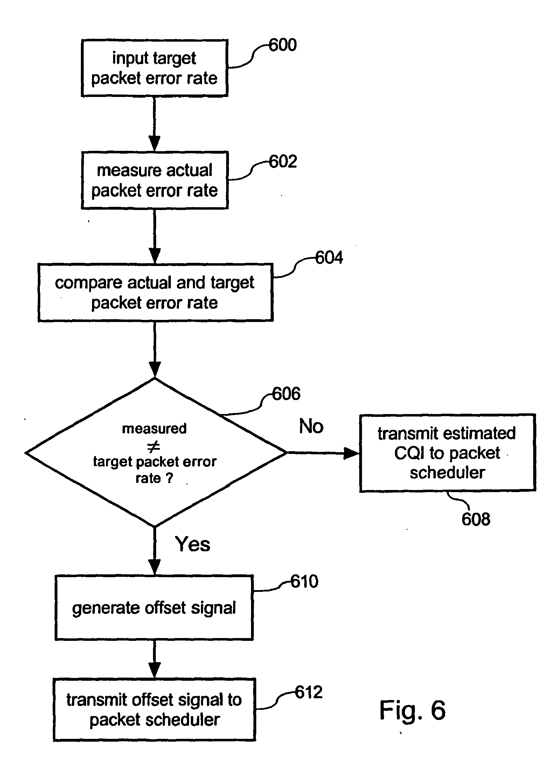

Figure 6 is illustrative of a flowchart for performing a calibration procedure on the basis of a packet error rate determination. In a first step 600, an target packet or target transmission error rate value is inputted and stored. Such a target error rate may be chosen e.g. to maximize the packet data throughput of the system for given transmission power. For instance, the target error rate might be 10 %.

In a second step 602, an actual packet error rate is measured, typically by processing a sequence of ACK/NACK messages that are obtained from the mobile station 104. In the successive step 604, the target packet error rate and the actually measured packet error rate are compared and in step 606 a decision is made whether deviations between predefined target packet error rate and the measured packet error rate are within an allowable margin or whether a calibration of the packet scheduler is required in order to compensate the measured mismatch.

If in step 606 the deviations of the measured packet error rate and the target packet error rate are above a certain threshold, the method proceeds with step 610, where an offset signal for the packet scheduler is generated. The offset signal serves to manipulate the determined CQI value and to modify subsequent packet scheduling in such a way, that the packet error rate returns into an allowable margin. Finally, the generate offset signal is transmitted to the packet scheduler in step 612. Depending on the offset signal, the determined CQI value can either be incremented or decremented before it is transmitted to the packet scheduler. Alternatively, an unmodified estimated CQI value can be provided to the packet scheduler when the offset signal is transmitted to the packet scheduler in a separate way. In this case the packet scheduler is further adapted to process the obtained offset signal.

In the opposite case, where in step 606 the deviations between the measured packet error rate and the target error rate are within acceptable margins, the calibration does not have to be applied and the estimated CQI value remains unmodified. Hence, in step 608 the estimated CQI value is transmitted to the packet scheduler.

### List of Reference Numerals

- 100: communication network
- 102: base station
- 104: mobile station
- 106: CQI receiver
- 108: CQU quality measurement unit
- 110: decision unit
- 112: packet scheduler
- 114: processing unit
- 116: CQI averaging module
- 118: CQI interpolation module
- 120: downlink channel
- 122: uplink channel
- 124: transmission power module
- 126: transmission error module
- 128: calibration unit
- 130: weighting module

## Claims

1. A method of estimating a channel quality of a wireless data transmission channel by making use of channel quality indicators being transmitted from a mobile station (104) to a base station (102) of a wireless communication network (100), wherein at least a first channel quality indicator is received from the mobile station, the at least first channel quality indicator being indicative of the channel quality at a first time, the method being **characterized by** the steps of:
- selecting an estimation procedure on the basis of the at least first channel quality indicator, the estimation procedure being adapted to estimate the channel quality at a second time,
- applying the selected estimation procedure for estimating the channel quality at the second time.

2. The method according to claim 1, wherein the estimation procedure comprises a channel quality interpolation procedure making at least use of the at least first channel quality indicator.

3. The method according to claim 1, wherein the estimation procedure comprises a channel quality averaging procedure making at least use of the at least first channel quality indicator.

4. The method according to claim 1, wherein the second time indicates a momentary point of time or a future point of time.

5. The method according to claim 1, further comprising a calibration procedure comprising the steps of:
- storing the estimated channel quality being indicative of the channel quality at the second time,
- determining a transmission quality measure of the data transmission channel,
- comparing the transmission quality measure with a predefined quality measure value,
- generating an offset signal for a packet scheduler (112) if a mismatch between the determined and the predefined quality measure value has been detected, the offset signal being adapted to control the packet scheduler in order to eliminate the mismatch.

6. The method according to claim 1, wherein selecting of the estimation procedure further comprises comparing of the estimated channel quality with a second channel quality being obtained by means of a second channel quality indicator being indicative of the channel quality at the second time.

7. The method according to claim 1, wherein selection of an estimation procedure further comprises performing of a weighting procedure, the weighting procedure being adapted to determine a weighted average channel quality on the basis of at least two channel qualities being determined by different estimation procedures.

8. A base station (102) of a wireless communication network (100) being adapted to estimate a channel quality of a wireless data transmission channel by making use of channel quality indicators being transmitted from a mobile station (104) to the base station, the base station comprising means for receiving (106) at least a first channel quality indicator from the mobile station, the at least first channel quality indicator being indicative of the channel quality at a first time, **characterized in that** the base station (102) further comprises:
- selection means (110) for selecting an estimation procedure on the basis of the at least first channel quality indicator, the estimation procedure being adapted to estimate the channel quality at a second time,
- a processing unit (114) being adapted to execute the selected estimation procedure for estimating the channel quality at the second time,
- a packet scheduler (112) being adapted to control a transmission of data packets to the mobile station in response to receive the estimated channel quality.

9. The base station according to claim 8, further comprising a calibration unit being adapted to compare a determined transmission quality measure of the data transmission channel with a predefined quality measure and to generate an offset signal for the packet scheduler if there exists a mismatch between the determined and the predefined quality measure, the offset signal serves to control the packet scheduler or to modify the estimated channel quality in order to eliminate the mismatch.

10. A computer program product for determining a channel quality of a wireless data transmission channel by making use of channel quality indicators being transmitted from a mobile station (104) to a base station (102) of a wireless communication network (100), the computer program product being adapted to, when running on a computer receive an at least first channel quality indicator from the mobile station, the first channel quality indicator being indicative of the channel quality at a first time, **characterized in that** the computer program product is further operable, when running on a computer, to:
- select an estimation procedure on the basis of the at least first channel quality indicator, the estimation procedure being adapted to estimate the channel quality at a second time,
- apply the selected estimation procedure for estimating the channel quality at the second time.

## Patentansprüche

1. Verfahren zur Abschätzung der Kanalqualität eines kabellosen Übertragungskanals durch Verwendung von Kanalqualitätskennzeichen, die von einer Mobilstation (104) an eine Basisstation (102) eines kabellosen Funkkommunikationsnetzes (100) übertragen werden, wobei mindestens ein erstes Kanalqualitätskennzeichen von der Mobilstation empfangen wird und wobei dieses mindestens erste Kanalqualitätskennzeichen die Kanalqualität zu einem ersten zeitpunkt angibt, und wobei das Verfahren durch die folgenden Schritte **gekennzeichnet** ist:
- Auswahl eines Abschätzungsverfahren auf der Basis von mindestens dem ersten Kanalqualitätskennzeichen, wobei das Abschätzungsverfahren so angepasst wurde, dass es die Kanalqualität zu einem zweiten Zeitpunkt abschätzt,
- Anwenden des ausgewählten Abschätzungsverfahrens, um die Kanalqualität zu einem zweiten Zeitpunkt abzuschätzen.

2. Verfahren gemäß Anspruch 1, wobei das Abschätzungsverfahren ein Verfahren zur Interpolierung der Kanalqualität umfasst, die zumindest das erste Kanalqualitätskennzeichen nutzt.

3. Verfahren gemäß Anspruch 1, wobei das Abschätzungsverfahren ein Verfahren zur Bildung der durchschnittlichen Kanalqualität umfasst, die zumindest das erste Kanalqualitätskennzeichen nutzt.

4. Verfahren gemäß Anspruch 1, wobei der zweite Zeitpunkt einen aktuellen Zeitpunkt oder einen zukünftigen Zeitpunkt angibt.

5. Verfahren gemäß Anspruch 1, das des Weiteren ein Kalibrierungsverfahren umfasst, das die folgenden Schritte umfasst:
- Speichern der geschätzten Kanalqualität, die die Kanalqualität zu dem zweiten Zeitpunkt abgibt,
- Ermitteln eines Übertragungsqualitätsmesswerts des Datenübertragungskanals,
- Vergleichen des Übertragungsqualitätsmesswerts mit einem vordefinierten Qualitätsmesswert,
- Erzeugen eines Versatzsignals für einen Packet Scheduler (112), wenn eine Abweichung zwischen dem ermittelten und dem vordefinierten Qualitätsmesswert erkannt wurde, wobei das Versatzsignal zur Steuerung des Packet Scheduler angepasst wurde, um diese Abweichung zu eliminieren.

6. Verfahren gemäß Anspruch 1, wobei die Auswahl des Abschätzungsverfahrens des Weiteren den Vergleich der geschätzten Kanalqualität mit einer zweiten Kanalqualität umfasst, die über ein zweites Kanalqualitätskennzeichen, das die Kanalqualität zum zweiten Zeitpunkt angibt, erhalten wird.

7. Verfahren gemäß Anspruch 1, wobei die Auswahl eines Abschätzungsverfahrens des Weiteren die Durchführung eines Gewichtungsverfahrens umfasst, das so angepasst wurde, dass es eine gewichtete durchschnittliche Kanalqualität auf der Basis von mindestens zwei Kanalqualitäten ermittelt, die mithilfe unterschiedlicher Abschätzungsverfahren ermittelt wurden.

8. Basisstation (102) eines kabellosen Kommunikationsnetzes (100), die so angepasst wurde, dass sie eine Kanalqualität eines kabellosen Datenübertragungskanals abschätzt durch Verwendung von Kanalqualitätskennzeichen, die von einer Mobilstation (104) an die Basisstation übertragen werden, wobei die Basisstation Mittel umfasst zum Empfangen (106) von mindestens einem ersten Kanalqualitätskennzeichen von der Mobilstation und wobei dieses mindestens erste Kanalqualitätskennzeichen die Kanalqualität zu einem ersten Zeitpunkt **kennzeichnet, dadurch gekennzeichnet, dass** die Basisstation (102) des Weiteren Folgendes umfasst:
- Auswahlmittel (110) zur Auswahl eines Abschätzungsverfahrens auf der Basis mindestens des ersten Kanalqualitätskennzeichens, wobei das Abschätzungsverfahren so angepasst wurde, das es die Kanalqualität zu einem zweiten Zeitpunkt abschätzt.
- Verarbeitungseinheit (114), die zur Ausführung des ausgewählten Abschätzungsverfahrens angepasst ist zur Abschätzung der Kanalqualität zu einem zweiten Zeitpunkt.
- Packet Scheduler (112), der zur Steuerung einer Übertragung von Datenpaketen an die Mobilstation als Reaktion auf den Empfang der abgeschätzten Kanalqualität angepasst ist.

9. Basisstation gemäß Anspruch 8, die des Weiteren eine Kalibrierungseinheit umfasst, die so angepasst wurde, dass sie einen vordefinierten Messwert für die Übertragungsqualität des Datenübertragungskanals mit einem vordefinierten Qualitätsmesswert vergleicht und ein Versatzsignal für den Packet Scheduler erzeugt, wenn eine Abweichung zwischen dem ermittelten und dem vordefinierten Qualitätsmesswert vorliegt, wobei das Versatzsignal zur Steuerung des Packet Scheduler dient oder zum Modifizieren der geschätzten Kanalqualität, um die Abweichung zu eliminieren.

10. Computerprogrammprodukt zur Bestimmung einer Kanalqualität eines kabellosen Datenübertragungskanals durch Nutzung der Kanalqualitätskennzeichen, die von einer Mobilstation (104) an eine Basisstation (102) eines kabellosen Kommunikationsnetzes (100) übertragen werden, wobei das Computerprogrammprodukt so angepasst wurde, dass es bei Ausführung auf einem Computer ein erstes Kanalqualitätskennzeichens von der Mobilstation empfängt, das die Kanalqualität zu einem ersten zeitpunkt angibt, **dadurch gekennzeichnet, dass** das Computerprogrammprodukt des weiteren eingesetzt werden kann, um bei Ausführung auf einem Computer:
- ein Abschätzungsverfahren auszuwählen auf der Basis mindestens des ersten Kanalqualitätskennzeichens, wobei dieses Abschätzungsverfahren so angepasst wurde, dass es die Kanalqualität zu einem zweiten Zeitpunkt abschätzt.
- das ausgewählte Abschätzungsverfahren zur Abschätzung der Kanalqualität zu dem zweiten Zeitpunkt anzuwenden.

## Revendications

1. Procédé d'estimation d'une qualité de voie d'une voie de transmission de données sans fil en utilisant des indicateurs de qualité de voie transmis depuis une station mobile (104) vers une station de base (102) d'un réseau de communication sans fil (100), dans lequel au moins un premier indicateur de qualité de voie est reçu depuis la station mobile, le au moins premier indicateur de qualité de voie étant indicatif de la qualité de voie à un premier temps, le procédé étant **caractérisé par** les étapes consistant à :
sélectionner une procédure d'estimation sur la base du au moins premier indicateur de qualité de voie, la procédure d'estimation étant adaptée pour estimer la qualité de voie à un second temps,
appliquer la procédure d'estimation sélectionnée pour estimer la qualité de voie au second temps.

2. Procédé selon la revendication 1, dans lequel la procédure d'estimation comprend une procédure d'interpolation de qualité de voie utilisant au moins le au moins premier indicateur de qualité de voie.

3. Procédé selon la revendication 1, dans lequel la procédure d'estimation comprend une procédure de moyenne de qualité de voie utilisant au moins le au moins premier indicateur de qualité de voie.

4. Procédé selon la revendication 1, dans lequel le second temps indique un point temporel momentané ou un point temporel futur.

5. Procédé selon la revendication 1, comprenant en outre une procédure de calibrage comprenant les étapes consistant à:
stocker la qualité de voie estimée indicative de la qualité de voie au second temps,
déterminer une mesure de qualité de transmission de la voie de transmission de données,
comparer la mesure de qualité de transmission à une valeur de mesure de qualité prédéfinie,
générer un signal de décalage pour un ordonnanceur de paquets (112) si un défaut de correspondance entre les valeurs déterminée et de mesure de qualité prédéfinie a été détecté, le signal de décalage étant adapté pour contrôler l'ordonnanceur de paquets afin d'éliminer le défaut de correspondance.

6. Procédé selon la revendication 1, dans lequel la sélection de la procédure d'estimation comprend en outre la comparaison de la qualité de voie estimée à une seconde qualité de voie obtenue au moyen d'un second indicateur de qualité de voie indicatif de la qualité de voie au second temps.

7. Procédé selon la revendication 1, dans lequel la sélection de la procédure d'estimation comprend en outre la réalisation d'une procédure de pondération, la procédure de pondération étant adaptée pour déterminer une qualité de voie moyenne pondérée sur la base d'au moins deux qualités de voie déterminées par des procédures d'estimation différentes.

8. Station de base (102) d'un réseau de communication sans fil (100) adaptée pour estimer une qualité de voie d'une voie de transmission de données sans fil en utilisant des indicateurs de qualité de voie transmis depuis une station mobile (104) à la station de base, la station de base comprenant des moyens de réception (106) d'au moins un premier indicateur de qualité de voie depuis la station mobile, le au moins premier indicateur de qualité de voie étant indicatif de la qualité de voie à un premier temps, **caractérisée en ce que** la station de base (102) comprend en outre :
des moyens de sélection (110) pour sélectionner une procédure d'estimation sur la base du au moins premier indicateur de qualité de voie, la procédure d'estimation étant adaptée pour estimer la qualité de voie à un second temps,
une unité centrale (114) adaptée pour exécuter la procédure d'estimation sélectionnée pour estimer la qualité de voie au second temps,
un ordonnanceur de paquets (112) adapté pour contrôler une transmission de paquets de données vers la station mobile en réponse à la réception de la qualité de voie estimée.

9. Station de base selon la revendication 8, comprenant en outre une unité de calibrage adaptée pour comparer une mesure de qualité de transmission déterminée de la voie de transmission de données à une mesure de qualité prédéfinie et pour générer un signal de décalage pour l'ordonnanceur de paquets s'il existe un défaut de correspondance entre les mesures de qualité déterminée et prédéfinie, le signal de décalage servant à contrôler l'ordonnanceur de paquets ou à modifier la qualité de voie estimée afin d'éliminer le défaut de correspondance.

10. Programme informatique destiné à déterminer une qualité de voie d'une voie de transmission de données sans fil en utilisant des indicateurs de qualité de voie transmis depuis une station mobile (104) à une station de base (102) d'un réseau de communication sans fil (100), le programme informatique étant adapté pour, lorsqu'il est exécuté sur un ordinateur, recevoir au moins un premier indicateur de qualité de voie depuis la station mobile, le au moins premier indicateur de qualité de voie étant indicatif de la qualité de voie à un premier temps, **caractérisé en ce que** le programme informatique peut en outre fonctionner pour, lorsqu'il est exécuté sur un ordinateur :
sélectionner une procédure d'estimation sur la base du au moins premier indicateur de qualité de voie, la procédure d'estimation étant adaptée pour estimer la qualité de voie à un second temps,
appliquer la procédure d'estimation sélectionnée pour estimer la qualité de voie au second temps.
